(19) **Europäisches Patentamt European Patent Office Office européen des brevets**

(11) **EP 0 831 303 B1**

(12) **EUROPÄISCHE PATENTSCHRIFT**

(45) Veröffentlichungstag und Bekanntmachung des Hinweises auf die Patenterteilung:
**23.04.2008 Patentblatt 2008/17**

(51) Int Cl.:
***G01F 1/32*** *(2006.01)*

(21) Anmeldenummer: **97810525.2**

(22) Anmeldetag: **24.07.1997**

(54) **Wirbel-Strömungsaufnehmer mit einem Turbulenzgitter**

Vortex flow sensor with a turbulance grid

Capteur de débit à tourbillon avec une grille à turbulence

(84) Benannte Vertragsstaaten:
**CH DE DK ES FR GB IT LI NL**

(30) Priorität: **21.08.1996 EP 96113384**

(43) Veröffentlichungstag der Anmeldung:
**25.03.1998 Patentblatt 1998/13**

(73) Patentinhaber: **Endress + Hauser Flowtec AG**
**4153 Reinach BL 1 (CH)**

(72) Erfinder: **Ohle, Frank, Dr. rer. nat.**
**79585 Steinen (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 038 258        FR-A- 2 434 374**
**US-A- 3 965 730        US-A- 5 193 399**

**Beschreibung**

Die Erfindung betrifft einen Wirbel-Strömungsaufnehmer zur Messung der Strömungsgeschwindigkeit bzw. des Volumendurchflusses eines in einem Meßrohr in einer Strömungsrichtung fließenden Fluids mit einem im Meßrohr angeordneten Staukörper und mit einem stromaufwärts von diesem angeordneten Turbulenzgitter.

Bei Betrieb eines derartigen Wirbel-Strömungsaufnehmer entsteht bekanntlich stromabwärts des Staukörpers eine Kármán'sche Wirbelstraße, deren Druckschwankungen von einem Wirbelsensor in ein elektrisches Signal umgeformt werden, dessen Frequenz proportional zum Volumendurchfluß ist.

Mit dem in Strömungsrichtung stromaufwärts des Staukörpers angeordneten Turbulenzgitter werden Miniaturwirbel erzeugt, die zu einer Vergleichmäßigung des Strömungsprofils beitragen. Turbulenzgitter dürfen allerdings nicht mit Strömungsgleichrichtern verwechselt werden, die im Englischen als "flow conditioner", vgl. die US-A 39 65 730, als "flow straightener" oder als "flow rectifier", vgl. die US-A 42 80 360 (= FR-A 24 34 374) oder die US-A 51 93 399 bezeichnet werden.

Während Strömungsgleichrichter Turbulenzen der Strömung dämpfen und sogar unterdrücken, sie also laminarisieren, erzeugen Turbulenzgitter gerade wohldefinierte Turbulenzen. Strömungsgleichrichter werden auch zusammen mit Turbulenzgittern stromaufwärts oder stromabwärts von diesen eingesetzt und erhöhen somit die Meßgenauigkeit.

In der US-A 43 97 192 (= EP-A 38 258) ist ein Wirbel-Strömungsaufnehmer zur Messung der Strömungsgeschwindigkeit bzw. des Volumendurchflusses eines in einem Meßrohr in einer Strömungsrichtung fließenden Fluids beschrieben

- mit einem im Meßrohr angeordneten Staukörper, der zur Erzeugung Kármán'scher Wirbel ausgebildet ist,
- mit einem Wirbelsensor, der auf von den Wirbeln erzeugte Druckschwankungen anspricht, und
- mit einem in Strömungsrichtung vor dem Staukörper angeordneten Turbulenzgitter mit Öffnungen, die identische, quadratische Querschnitte aufweisen.

Wie dieser Stand der Technik zeigt, wurde bisher offenbar angenommen, daß mit regelmäßigen und identischen Querschnitten der Öffnungen des Turbulenzgitters eine ausreichende Meßgenauigkeitserhöhung erreichbar ist.

Vom Markt werden jedoch immer größere Meßgenauigkeiten erwartet, die heute schon in der Größenordnung von 0,1% liegen, die sich aber mit dem vorschriebenen Wirbel-Strömungsaufnehmer nicht erzielen lassen.

Eine Aufgabe der Erfindung ist daher die weitere Verbesserung der Meßgenauigkeit.

Hierzu besteht die Erfindung in einem Wirbel-Strömungsaufnehmer zur Messung der Strömungsgeschwindigkeit bzw. des Volumendurchflusses eines in einem Meßrohr in einer Strömungsrichtung fließenden Fluids gemäß Anspruch 1.

Vorteilhafte Ausführungen sind in den abhängigen Ansprüchen definiert.

Ein Vorteil der Erfindung besteht darin, daß bei Einbau eines Wirbel-Strömungsaufnehmers in eine Rohrleitung keine oder allenfalls kurze Einlaufstrecken erforderlich sind.

Die Erfindung und ihre Vorteile werden nun anhand von Ausführungsbeispielen näher erläutert, die in den Figuren der Zeichnung dargestellt sind.

Fig. 1      zeigt schematisch im Längsschnitt einen Wirbel-Strömungsaufnehmer mit einem Turbulenzgitter,

Fig. 2a      zeigt schematisch einen Querschnitt einer ersten Variante eines Turbulenzgitters,

Fig. 2b      zeigt ein zu Fig. 2a gehörendes Funktionsdiagramm,

Fig. 3      zeigt schematisch einen Querschnitt einer zweiten Variante eines Turbulenzgitters, und

Fig. 4      zeigt ein Strömungsprofil-Diagramm.

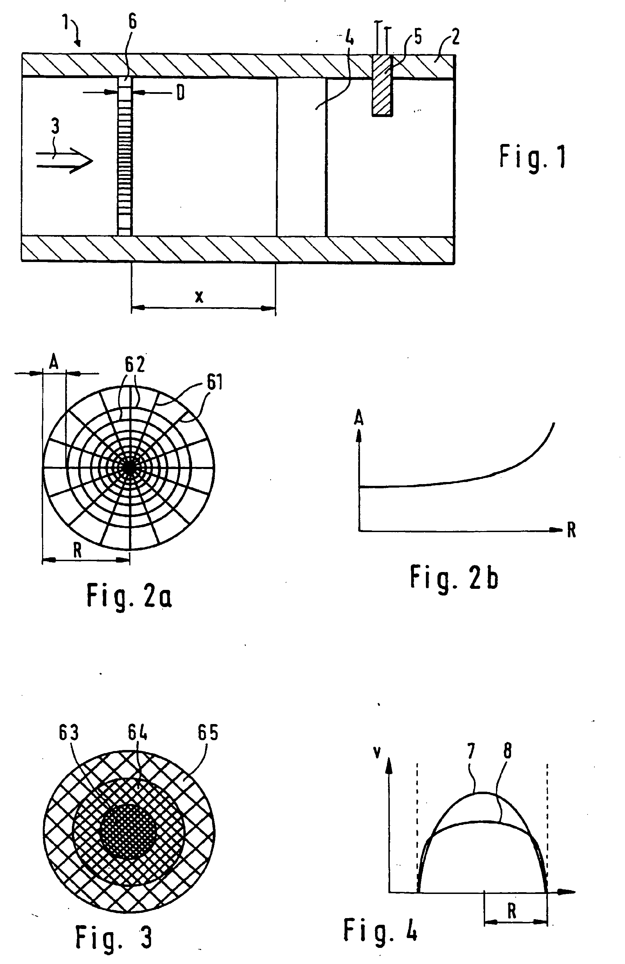

Im Ausführungsbeispiel der Fig. 1 ist schematisch im Längsschnitt ein Wirbel-Strömungsaufnehmer 1 gezeigt. Er enthält ein Meßrohr 2, in dem ein zu zu messendes Fluid, z.B. eine Flüssigkeit, ein Gas oder ein Dampf, insb. Wasserdampf, in einer vorgegebenen Strömungsrichtung fließt, wie durch den Pfeil 3 veranschaulicht ist.

Im Meßrohr 2 ist ein Staukörper 4 befestigt, z.B. dadurch, daß er mit der Innenwand des Meßrohrs verschweißt ist. Der Staukörper 4 dient der Erzeugung von Kármán'schen Wirbeln und hat irgendeine der hierfür üblichen Formen. So kann er z.B. einen dreieck- oder trapezförmigen Querschnitt haben. Er hat ferner eine Staufläche, die, insb. senkrecht, angeströmt wird.

Im Ausführungsbeispiel der Fig. 1 ist stromabwärts vom Staukörper 4 ein Wirbelsensor 5 in der Wand des Meßrohrs 2 angeordnet, der auf von den Wirbeln im Fluid erzeugte Druckschwankungen anspricht. Als Wirbelsensoren 5 können die bei Wirbel-Strömungsaufnehmern hierfür üblichen Arten von auf Druck ansprechenden elektromechanischen Wandler dienen, wie z.B. kapazitive, piezoelektrische oder induktive, insb. elektrodynamische, Wandler.

Anstatt den Wirbelsensor 5 stromabwärts vom Staukörper 4 anzuordnen, kann er auch in einer Bohrung des Staukörpers angeordnet werden, wobei dann die Druckänderungen über mindestens eine weitere Bohrung des Staukörpers zu einem solchen Wirbelsensor gelangen. Ferner kann der Wirbelsensor in eine Seitenfläche des Staukörpers dicht eingesetzt sein, wobei die elektrischen Zuleitungen des Wirbelsensors in einer Bohrung des Staukörpers geführt sind, die mit dem Fluid nicht in Verbindung steht.

In Strömungsrichtung vor dem Staukörper 4, also stromaufwärts, ist im Meßrohr 2 ein Turbulenzgitter 6 angeordnet, das sich im Ausführungsbeispiel über das gesamte Lumen des Meßrohrs 2 erstreckt und somit kreisförmig ist. Das Turbulenzgitter 6 hat Öffnungen, die mindestens teilweise voneinander abweichende Querschnitte aufweisen. Es hat in Strömungsrichtung eine Dicke D und weist einen Abstand x zum Staukörper 4 auf. Bevorzugt gilt für D und x: 20D < x < 40D. Zwischen dem Staukörper 4 und dem Turbulenzgitter 6 wird von diesem im Fluid eine homogen-isotrope aus einer anisotropen Turbulenz erzeugt.

Die Fig. 2a zeigt in Vorderansicht eine erste Variante des Turbulenzgitters 6; es ist kreisförmig und wird von Radialstegen 61 einer Länge R und konzentrischen Kreisstegen 62 gebildet, die gegenseitige Abstände A voneinander haben. Das Turbulenzgitter der Fig. 2a hat somit ein Zentrum, von dem die Radialstege 61 ausgehen. Die Länge R ist zugleich der Radius des Lumens des Meßrohrs 2.

Insbesondere sind nach Fig. 2a Radialstege 61, deren Anzahl hier 16 ist, auf den Umfang des Kreises gleichverteilt angeordnet. Die gegenseitigen Abstände der Kreisstege nehmen in Richtung von außen nach innen ab, bevorzugt nach einer Potenzfunktion; es gilt:

$$A = k_1 + k_2 R + k_3 R^{1,4}.$$

Dabei sind $k_1$, $k_2$, $k_3$ Konstanten, die vom Hersteller der Wirbel-Strömungsaufnehmer nach Bedarf gewählt werden. Die Konstante $k_1$ ist der Abstand der innersten Kreisflächen vom Zentrum und entspricht dem Schnittpunkt der Kurve von Fig. 2b mit der Ordinate. In Fig. 2b ist die Potenzfunktion qualitativ, also nicht maßstäblich, als Diagramm dargestellt.

In Fig. 2a haben die Sektorflächen, die zwischen zwei konzentrischen Kreisstegen 62 und zwei benachbarten Radialstegen 61 liegen, gleiche Flächen. Die Sektorflächen, die vom Zentrum nach außen gesehen entlang zweier benachbarter Radialstege 61 aufeinander folgen, sind jedoch nicht flächengleich, sondern der Wert ihrer Fläche nimmt in Richtung auf das Zentrum stufenweise ab.

Die Größe der Sektorflächen läßt sich mittels der bekannten Formeln der Kreisgeometrie leicht berechnen und kann vom Hersteller der Wirbel-Strömungsaufnehmer nach Bedarf gewählt werden.

Fig. 3 zeigt in Draufsicht eine zweite Variante des Turbulenzgitters 6, das im Gegensatz zur ersten Variante quadratische Öffnungen hat. Diese haben daher keine durch eine Formel ausdrückbare Beziehung zu den Öffnungen der ersten Variante.

Das Turbulenzgitters von Fig. 3 ist zwar wie das der Fig. 2a kreisförmig, besteht jedoch aus einem inneren kreisförmigen Teilgitter 63 mit Öffnungen eines ersten Wertes der Querschnittsfläche, aus einem ersten äußeren, daran anschließenden Ringgitter 64 mit Öffnungen eines zweiten Wertes der Querschnittsfläche, der größer als der erste Wert ist, und aus einem zweiten äußeren, daran anschließenden Ringgitter 65 mit Öffnungen eines dritten Wertes der Querschnittsfläche, der größer als der zweite Wert ist. Die Werte der drei Querschnittsflächen sind vom Hersteller der Wirbel-Strömungsaufnehmer nach Bedarf wählbar.

Die Quadrate des Teilgitters 63 und die der Ringgitter 64, 65 haben im Ausführungsbeispiel der Fig. 3 dieselbe Ausrichtung; ihre Kanten sind somit parallel zueinander und fluchten zum Teil. Dies ist jedoch nicht zwingend. Vielmehr können die Quadrate des Teilgitters 63 zu denen der Ringgitter 64 oder 65 unterschiedlich ausgerichtet sein.

In Fig. 4 sind zwei qualitative, also nicht maßstäbliche, Kurven des Strömungsprofils gezeigt, wie es sich ohne (Kurve 7) bzw. mit (Kurve 8) Turbulenzgitter 6 im Meßrohr 2 ausbildet. Die Strömungsgeschwindigkeit ist auf der Ordinate und auf der Abszisse ist der Durchmesser des Lumens des Meßrohrs 2 (vgl. die gestrichelten Linien) mit eingezeichnetem Radius R aufgetragen. Das Strömungsprofil der Kurve 8 ist flacher als das der Kurve 7 und somit in einem großen Teil des Querschnitts praktisch konstant.

**Patentansprüche**

1.  Wirbel-Strömungsaufnehmer (1) zur Messung der Strömungsgeschwindigkeit bzw. des Volumendurchflusses eines in einem Meßrohr (2) in einer Strömungsrichtung (3) fließenden Fluids

    - mit einem im Meßrohr angeordneten Staukörper (4), der zur Erzeugung Kármán'scher Wirbel ausgebildet ist, und
    - mit einem Wirbelsensor (5), der auf von den Wirbeln erzeugte Druckschwankungen anspricht,
    - wobei der Wirbel-Strömungsai-ifnehmer (1) ein in Strömungsrichtung vor dem Staukörper angeordnetes kreisförmiges Turbulenzgitter (6) mit Öffnungen, die mindestens teilweise voneinander abweichende Querschnitte aufweisen, umfaßt, das von Radialstegen (61) und konzentrischen Kreisstegen (62)gebildet ist, die gegenseitige Abstände (A) voneinander haben, oder
    - wobei der Wirbel-Strömungsaufnehmer (1) ein in Strömungsrichtung vor dem Staukörper angeordnetes kreisförmiges Turbulenzgitter (6) mit Öffnungen, die mindestens teilweise voneinander abweichende Querschnitte aufweisen, umfaßt, das aus einem inneren kreisförmigen Teilgitter (63) mit quadratischen Öffnungen eines ersten Werts des Querschnitts und aus mindestens einem äußeren daran anschließenden Ringgitter mit Öffnungen eines zweiten Werts des Querschnitts besteht, der größer als der erste Wert ist.

2. Wirbel-Strömungsaufnehmer nach Anspruch 1, wobei das Turbulenzgitter mittels Radialstegen (61), von denen eine Anzahl gleichverteilt angeordnet ist, und mittels konzentrischer Kreisstege (62), deren gegenseitigen Abstände (A) in Richtung von außen nach innen abnehmen, gebildet ist.

3. Wirbel-Strömungsaufnehmernach dem vorherigen Anspruch, wobei die gegenseitigen Abstände (A) der Kreisstege (62) nach einer Potenzfunktion abnehmen.

4. Wirbel-Strömungsaufnehmer nach Anspruch 1, wobei das Turbulenzgitter mittels des inneren kreisförmige Teilgitter (63) mit quadratischen Öffnungen sowie mehreren Ringgittern (64, 65), deren jeweilige quadratische Öffnungen von außen nach innen einen jeweils abnehmenden, in jedem Ringgitter jedoch konstanten Wert des Querschnitts haben, gebildet ist.

5. Wirbel-Strömungsaufnehmer nach einem der vorherigen Ansprüche, wobei das Turbulenzgitter in Strömungsrichtung eine Dicke D und einen Abstand x zum Staukörper aufweist sowie so angeordnet ist, daß gilt: 20D < x < 40D.

**Claims**

1. A vortex-flow pick-up sensor (1) for measuring the flow velocity and the volume flow rate respectively of a fluid flowing in a measuring tube (2) in a flow direction (3),

- with an accumulating body (4) which is arranged in the measuring tube and which is designed to generate Kármán vortices, and
- with a vortex sensor (5) which responds to fluctuations in pressure produced by the vortices,
- wherein the vortex-flow pick-up sensor (1) comprises a circular turbulence grid (6) arranged in the flow direction upstream of the accumulating body and having openings which have cross-sections deviating from one another at least in part, which turbulence grid is formed by radial webs (61) and concentric circular webs (62) which are at mutual distances (A) from one another, or
- wherein the vortex-flow pick-up sensor (1) comprises a circular turbulence grid (6) arranged in the flow direction upstream of the accumulating body and having openings which have cross-sections deviating from one another at least in part, which turbulence grid consists of an inner circular partial grid (63) with square openings of a first value of the cross-section and of at least one outer annular grid adjoining it with openings of a second value of the cross-section, which is greater than the first value.

2. A vortex-flow pick-up sensor according to Claim 1, wherein the turbulence grid is formed by means of radial webs (61), a number of which are arranged uniformly distributed, and by means of concentric circular webs (62), the mutual distances (**A**) of which decrease in the direction from the outside to the inside.

3. A vortex-flow pick-up sensor according to the preceding Claim, wherein the mutual distances (**A**) of the circular webs (62) decrease in accordance with a power function.

4. A vortex-flow pick-up sensor according to Claim 1, wherein the turbulence grid is formed by means of the inner circular partial grid (63) with square openings and a plurality of annular grids (64, 65), the respective square openings of which have, from the outside to the inside, a value of the cross-section which decreases in each case but which is constant in each annular grid.

5. A vortex-flow pick-up sensor according to any one of the preceding Claims, wherein the turbulence grid has a thickness **D** and is at a distance **x** from the accumulating body in the flow direction and is arranged in such a way that the following is true:

$$20\mathbf{D} < \mathbf{x} < 40\mathbf{D}.$$

**Revendications**

1. Débitmètre vortex (1) destiné à la mesure de la vitesse d'écoulement ou du débit volumique d'un fluide circulant dans un sens d'écoulement prédéfini (3) au sein d'un tube de mesure (2)

- avec un corps de retenue (4) disposé dans le tube de mesure, qui sert à la génération de tourbillons de Karman, et
- avec un capteur vortex (5), qui réagit aux fluctuations de pression générées par les tourbillons,
- le débitmètre vortex (1) comprenant une grille de turbulence (6) circulaire disposée en amont, dans le sens d'écoulement, du corps de retenue, avec des ouvertures, qui présentent au moins partiellement des sections différentes les unes des autres, grille qui est formée d'ailettes radiales (61) et d'ailettes circulaires concentriques (62), qui ont des distances mutuelles (A) les unes par rapport aux autres, ou

- le débitmètre vortex (1) comprenant une grille de turbulence (6) circulaire disposée en amont, dans le sens d'écoulement, du corps de retenue, avec des ouvertures, qui présentent au moins partiellement des sections différentes les unes des autres, grille qui est constituée d'une grille partielle (63) circulaire intérieure avec des ouvertures quadratiques d'une première valeur de section, et d'au moins une grille annulaire extérieure attenante à la grille partielle (63), avec des ouvertures d'une deuxième valeur de section, qui est supérieure à la première valeur.

2. Débitmètre vortex selon la revendication 1, pour lequel la grille de turbulence est formée d'ailettes radiales (61), parmi lesquelles un certain nombre d'entre elles sont réparties de façon égale, et d'ailettes circulaires (62) concentriques, dont les distance mutuelles (A) diminuent en se dirigeant de l'extérieur vers l'intérieur.

3. Débitmètre vortex selon la revendication précédente, pour lequel les distances mutuelles (A) des ailettes circulaires (62) diminuent d'après une fonction puissance.

4. Débitmètre vortex selon la revendication 1, pour lequel la grille de turbulence est formée d'une grille partielle (63) circulaire intérieure avec des ouvertures quadratiques, ainsi que de plusieurs grilles annulaires (64, 65), dont les ouvertures quadratiques respectives ont une valeur de section décroissante de l'extérieur vers l'intérieur, toutefois une valeur de section constante au sein de chaque grille annulaire.

5. Débitmètre vortex selon l'une des revendications précédentes, pour lequel la grille de turbulence présente, dans le sens d'écoulement, une épaisseur D et une distance x par rapport au corps de retenue, et sont disposés selon la relation suivante : 20D < x < 40D.

Fig. 1

Fig. 2a

Fig. 2b

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3965730 A
- US 4280360 A
- FR 2434374 A
- US 5193399 A
- US 4397192 A
- EP 38258 A